**Europäisches Patentamt**

**European Patent Office**

**Office européen des brevets**

(19)

(11) Veröffentlichungsnummer: **0 096 084**
**B1**

# (12) EUROPÄISCHE PATENTSCHRIFT

(45) Veröffentlichungstag der Patentschrift:
02.10.85

(51) Int. Cl.⁴: **G 03 F 3/08**

(21) Anmeldenummer: **82104900.4**

(22) Anmeldetag: **04.06.82**

(54) **Verfahren zur Vermeidung von Bildfehlern beim Mehrfarbendruck, die durch fehlerhaften Übereinanderdruck der Farbauszüge entstehen.**

(43) Veröffentlichungstag der Anmeldung:
**21.12.83 Patentblatt 83/51**

(45) Bekanntmachung des Hinweises auf die Patenterteilung:
**02.10.85 Patentblatt 85/40**

(84) Benannte Vertragsstaaten:
**AT BE CH DE FR GB IT LI NL SE**

(56) Entgegenhaltungen:
**DE - A - 2 360 720**
**DE - A - 2 446 761**

(73) Patentinhaber: **DR.-ING. RUDOLF HELL GmbH, Grenzstrasse 1-5, D-2300 Kiel 14 (DE)**

(72) Erfinder: **Hennig, Eberhard, Bundhorster Chaussee 3, D-2323 Ascheberg (DE)**
Erfinder: **Kile, Jürgen, Schulkoppel 12, D-2301 Tökendorf (DE)**

## Beschreibung

Die Erfindung bezieht sich auf das Gebiet des Mehrfarbendrucks und betrifft ein Verfahren und eine Einrichtung zum Vermeiden von Bildfehlern, die durch fehlerhaften Übereinanderdruck der Farbauszüge der einzelnen Druckfarben (Magenta (M), Cyan (C), Gelb (Y) und Schwarz (K)) entstehen, wobei eine Originalbildvorlage optisch-elektrisch abgetastet wird und bei der Abtastung trichromatische primäre Farbmeßwertsignale R, G, B gewonnen werden, die für die Druckfarben Magenta, Cyan, Gelb und Schwarz in Farbauszugssignale umgewandelt werden, welche die Herstellung der für den Druck verwendeten Farbauszüge steuern und wobei in den Farbauszügen an Grenzen zwischen den Farbbereichen jeweils die Randzone eines Bereichs einer Farbe unter die Randzone eines Bereichs einer anderen Farbe verschoben wird.

Beim heute üblichen Mehrfarbendruck, bei dem mit subtraktiver Farbmischung gearbeitet wird, treten durch Passerfehler beim Übereinanderdruck der Farben in den Druckwerken, durch andere Ursachen, z. B. extreme Farbrücknahme in den einzelnen Farbauszügen oder durch ungenaues Ineinanderkopieren von Bildern sogenannte »Blitzer« auf, die in Form von Farbsäumen oder weißer Stellen, an denen das Papierweiß zutage tritt, störend in Erscheinung treten und die Bildqualität herabsetzen.

In der DE-A-2 446 761 ist z. B. für den additiven Farbdruck ein Verfahren angegeben, bei dem dunkle Farbbereiche um eine vorgegebene Breite verringert und helle Farbbereiche in Richtung über die dunklen Farbbereiche hinaus vergrößert werden, um das Verlaufen von Farben zu kompensieren, aber die Verbindung der Farbbereiche beim tatsächlichen Druck sicherzustellen. Bei dieser Art von Druck wird für jede zu druckende Einzelfarbe ein Farbauszug erstellt, und die Farbauszüge werden je nach der gewünschten Farbstellung mit einer Farbe vorgegebener Farbzusammensetzung, z. B. Rosa, Violett oder Braun usw. eingefärbt. So entsteht entsprechend der Vorlage durch den Übereinanderdruck der Farbauszüge das gewünschte Farbmuster, entweder in den Farben der Originalvorlage oder entsprechend der gewählten Farbstellung in einem anderen vom Original abweichenden Farbmuster. Sowohl bei der Herstellung der Originalvorlage (Musterpatrone) als auch beim Druck selbst wird mit Farben genau festgelegter Farbzusammensetzung gearbeitet, damit einerseits bei der optisch-elektrischen Abtastung der Originalvorlagen die Farben exakt erkannt werden können, und andererseits beim Druck die entsprechenden Bildpartien bzw. Musterelemente in der gewünschten Farbe erscheinen.

Bei diesem Druckverfahren ist es einfach, die durch Registerungenauigkeit, d. h. durch Passerfehler auftretenden Blitze, Farbsäume bzw. unerwünschten Überlappungen oder ungleichmäßige Breite von Linien in dunklen Farbgrenzen, wie bereits erwähnt, dadurch zu vermeiden, daß eine Vergrößerung oder Verringerung der Flächen der einzelnen Farbbereiche in dem Sinn vorgenommen werden, daß dunkle Farbbereiche insgesamt um eine vorgegebene Breite verringert und helle Bereiche ebenfalls insgesamt in Richtung und über dunkle Farbbereiche hinaus vergrößert werden. Das Kriterium für diese Arbeitsweise ist bei diesem Verfahren leicht zu gewinnen, da an den in Frage kommenden Bildstellen nur jeweils zwei Farben exakt definierter Farbzusammensetzung zusammentreffen, und man bei der gewählten Farbstellung leicht zwischen beiden Farben feststellen bzw. festlegen kann, welche den helleren bzw. dunkleren Farbbereich bildet. Hinzu kommt, daß insgesamt die Anzahl der verwendeten Farben auf eine geringe Zahl begrenzt ist, wodurch eine eindeutige Aussage bezüglich dieses Kriteriums jederzeit gemacht werden kann.

Beim eingangs beschriebenen Mehrfarbendruck, bei dem mit subtraktiver Farbmischung gearbeitet wird und keine Erkennung von Einzelfarben von der Mustervorlage her durchgeführt wird, liegen völlig andere Verhältnisse vor. An Bildstellen, an denen solche eingangs beschriebenen Fehler auftreten können, kann eine Vielzahl von unterschiedlichen Farben nebeneinander auftreten. Dies mag daraus zu ersehen sein, daß die einzelnen Druckfarben je nach Farbe der Originalvorlage sämtliche Zwischenwerte zwischen 0 und 100% annehmen können, wodurch sämtliche Farben des Farbraums auftreten können. Es wird also hier nicht wie bei der eingangs beschriebenen DE-A durch die Farbstellung bestimmt, welche von zwei Farben an einer Kontur die hellere bzw. dunklere ist, sondern von den bei der Abtastung der Originalvorlage gewonnenen Farbsignalen muß jeweils bestimmt werden, welche die hellere oder dunklere Druckfarbe ist.

Der vorliegenden Erfindung liegt daher die Aufgabe zugrunde, ein Verfahren und eine Einrichtung anzugeben, mit denen Bildfehler, die beim Mehrfarbendruck durch fehlerhaften Übereinanderdruck der einzelnen Farbauszüge entstehen, vermieden werden können.

Die Erfindung erreicht dies durch die in den kennzeichnenden Teilen der Ansprüche 1 und 2 angegebenen Merkmale.

Die Erfindung wird im folgenden anhand der Fig. 1 bis 12 näher erläutert. Es zeigt

Fig. 1 eine Prinzipdarstellung des Vorgangs der Überfüllung an einer Kontur,

Fig. 2a und 2b eine in Bildpunkte aufgeteilte Kontur mit einem entsprechenden Feld zur Untersuchung der Kontur,

Fig. 3a ein Beispiel für eine Überfüllung von »innen« nach »außen«,

Fig. 3b ein Beispiel für den Überfüllvorgang für die Überfüllrichtung von »außen« nach »innen«,

Fig. 4a und 4b Beispiele für die Überfüllung beim Einkopieren eines Buchstabens,

Fig. 5 bis 11 Beispiele für die Richtungsmatrizen und Überfüllmatrizen, wie sie bei der Überfüllung gemäß Fig. 4a und 4b verwendet wurden und

Fig. 12 ein Beispiel für eine Einrichtung zur Durchführung des Verfahrens.

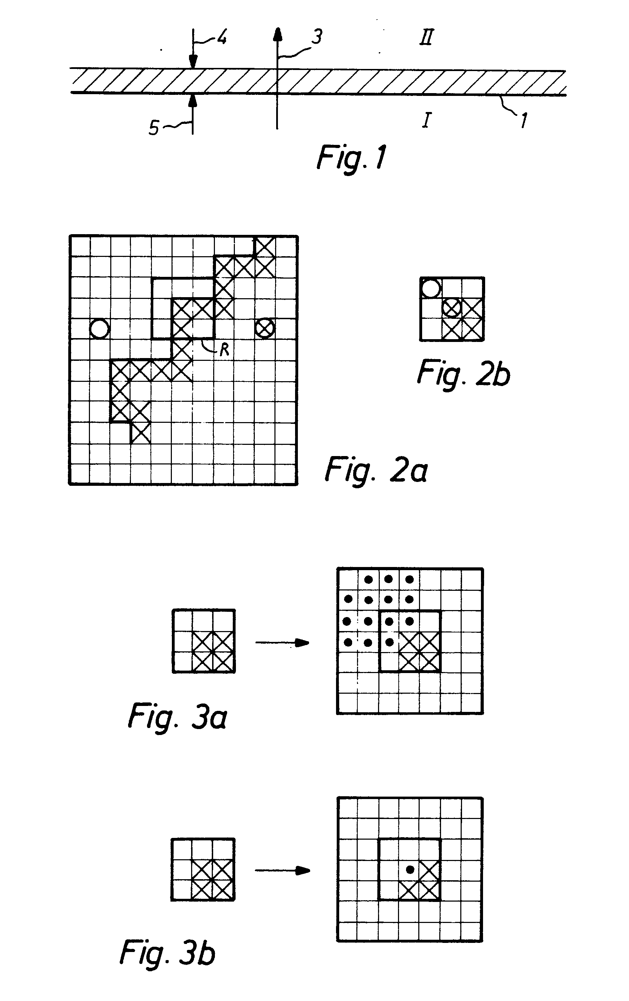

Anhand der Fig. 1 sei das Prinzip des Überfüllvorgangs näher dargestellt.

An einer Kontur 1 trifft ein visuell heller Bereich I auf einen visuell dunkleren Bereich II. Ein Pfeil 3 gibt an, in welcher Richtung überfüllt werden soll. Durch die Pfeile 4 und 5 ist eine Überlappungszone angedeutet, die eine vorgegebene Überfüllbreite haben soll.

In Fig. 2a ist ebenfalls eine Kontur dargestellt, die einen etwas unregelmäßigeren Verlauf als in Fig. 1 hat, wobei die entsprechende Bildfläche in einzelne Bildpunkte aufgelöst ist, die durch quadratische, aneinander angrenzende Felder dargestellt sind. Die Größe der einzelnen Bildpunkte ergibt sich bei der Bildabtastung aus der jeweils gewählten Auflösung bzw. der Auflösung, mit der die Bilddaten in einem Speichermedium abgelegt sind.

Die Grenze zwischen dem hellen Bereich I und dem dunklen Bereich II ist in der Zeichnung der Fig. 2a durch gekreuzt dargestellte Bildpunkte angedeutet, die zu dem dunkleren Farbbereich II gehören und daher konturbestimmend sind. Weiterhin ist in Fig. 2a ein rechteckiges Feld R, das in Fig. 2b nochmals einzeln dargestellt ist, eingezeichnet, mit dessen Hilfe, wie später noch erläutert wird, bestimmt wird, ob der zu untersuchende Bildpunkt innerhalb oder außerhalb der Kontur liegt und durch das die Überfüllrichtung bestimmt wird. Ein Kreis mit Kreuz bedeutet in Fig. 2b, daß der Bildpunkt innerhalb der Kontur liegt, und ein Kreis ohne Kreuz bedeutet, daß der Bildpunkt außerhalb der Kontur liegt.

Im Mehrfarbendruck ist bei subtraktiver Farbmischung ein Bild durch drei oder vier Druckfarben, die übereinandergedruckt werden, reproduziert. Daraus ergibt sich, daß auf jeden Bildpunkt drei oder vier Druckfarben-Dosierungssignale für die Druckfarben Gelb Y, Magenta M, Cyan C bzw. Schwarz K fallen. Diese Druckfarben-Dosierungssignale, im folgenden auch Farbauszugssignale genannt, dienen bei der vorliegenden Erfindung als Kriterium für den Überfüllvorgang. Da die Menge der Druckfarbe und damit auch die Größe der Farbauszugssignale an aneinandergrenzenden Bildpunkten unterschiedlich sind und der Kontureindruck durch die Grenze zwischen einem hellen und dunklen Farbbereich entsteht, wird davon ausgegangen daß der dunklere Farbbereich konturbestimmend ist.

In einem ersten Verfahrensschritt wird daher zunächst an einem solchen Übergang die konturbestimmende Farbe mit Hilfe des entsprechenden Farbauszugssignals ermittelt. Zunächst werden die Farbauszugssignale Y, M, C und K von zwei aneinandergrenzenden Bildpunkten mit farbspezifischen Gewichtungsfaktoren bewertet. Dies geschieht durch Multiplikation mit Faktoren $a_1$, $a_2$, $a_3$ bzw. $a_4$. Da die einzelnen Farben am visuellen Kontureindruck unterschiedlich stark beteiligt sind, weichen diese Faktoren voneinander ab, und es wurden im vorliegenden Fall für die einzelnen Druckfarben folgende Faktoren gewählt, und zwar für Y der Wert 0,3, für M der Wert 0,7, für C der Wert 0,9 und für K der Wert 0,2. Nach dieser Bewertung wird dann das Maximale der zu einem Bildpunkt gehörende Farbauszugssignale ermittelt und mit dem maximalen Signal des Nachbarbildpunktes verglichen. Das größte dieser beiden Signale stellt dann den dunkleren Farbbereich, der konturbestimmend ist, dar, und das Maximalsignal ist das konturbestimmende Farbauszugssignal. Die Kontur verläuft also zwischen diesen beiden Bildpunkten entlang.

Gemäß Fig. 1 wird nun die Breite der Überlappungszone vorgegeben, in der überfüllt werden soll. Innerhalb des Überlappungsbereiches wird für die einzelnen Bildpunkte des dunkleren Bereichs II das konturbestimmende Farbauszugssignal unverändert beibehalten. Die anderen Farbauszugssignale dieser Bildpunkte werden durch die entsprechenden Farbauszugssignale des angrenzenden, helleren Bildpunktes ersetzt. Im hellen Bildbereich I werden die Farbauszugssignale unverändert beibehalten.

Bei anderer Überfüllrichtung kehrt sich dieses um.

In den Fig. 3a und 3b ist dies an zwei Beispielen erläutert. Fig. 3a zeigt die Überfüllung von »innen« nach »außen« anhand der entsprechenden Richtungs- und Überfüllmatrizen und Fig. 3b die Überfüllung von »außen« nach »innen«. Zu den auf der linken Seite in der Figur dargestellten Richtungsmatrizen gehören die entsprechenden Überfüllmatrizen, wobei die in der Figur mit Punkten bezeichneten Bildpunkte überfüllt werden.

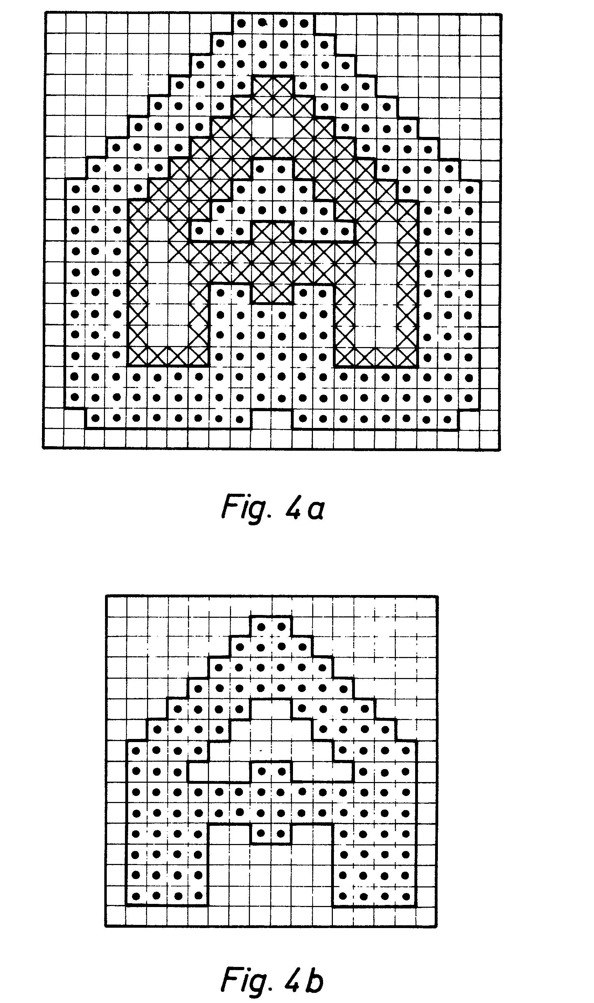

In den Fig. 4a und 4b ist dies anhand des Einkopierens eines Buchstabens »A« dargestellt. Fig. 4a zeigt den Überfüllvorgang bei einem hellen Buchstaben »A« in dunkler Umgebung und Fig. 4b für einen dunklen Buchstaben »A« in heller Umgebung.

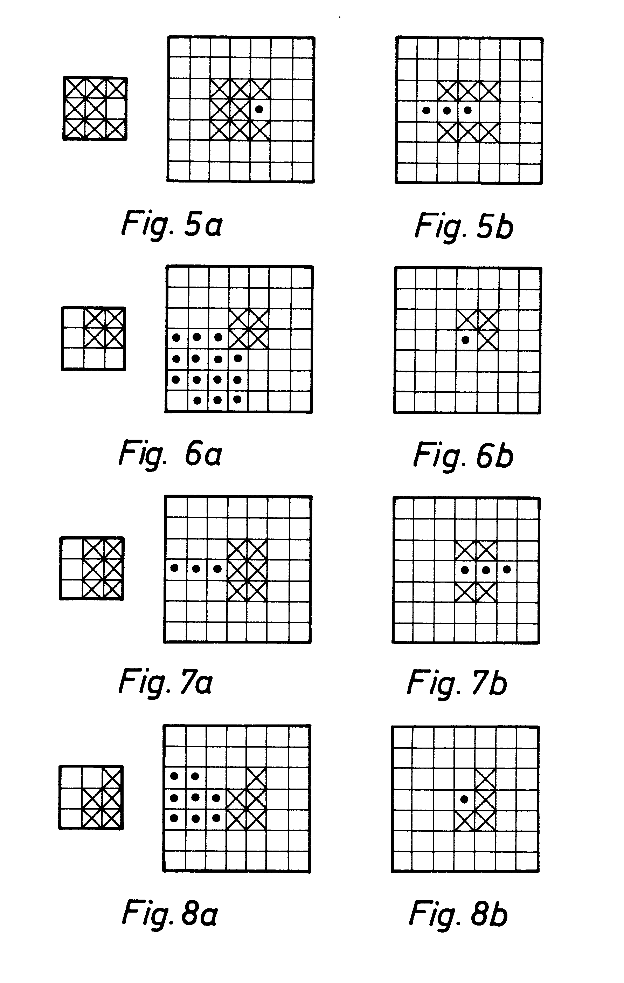

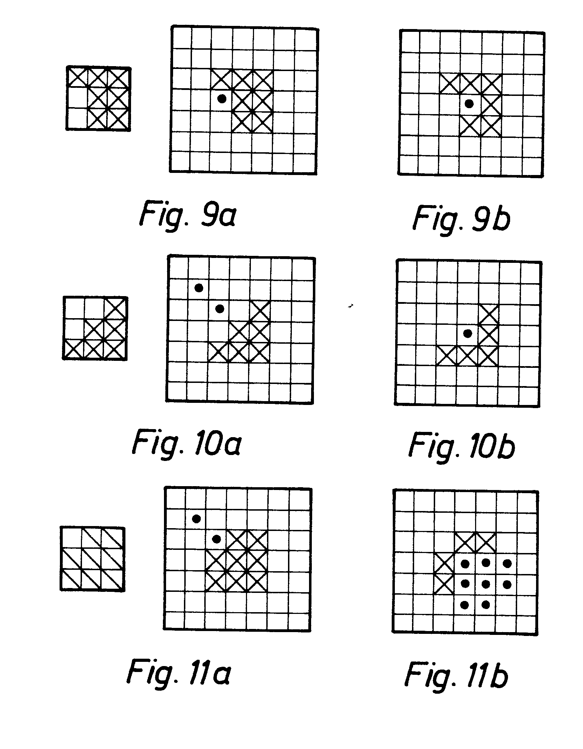

Die Fig. 5a bis 11a zeigen die zu der Fig. 4a gehörenden Richtungs- und Überfüllmatrizen und die Fig. 5b bis 11b die zu der Fig. 4b gehörenden Matrizen.

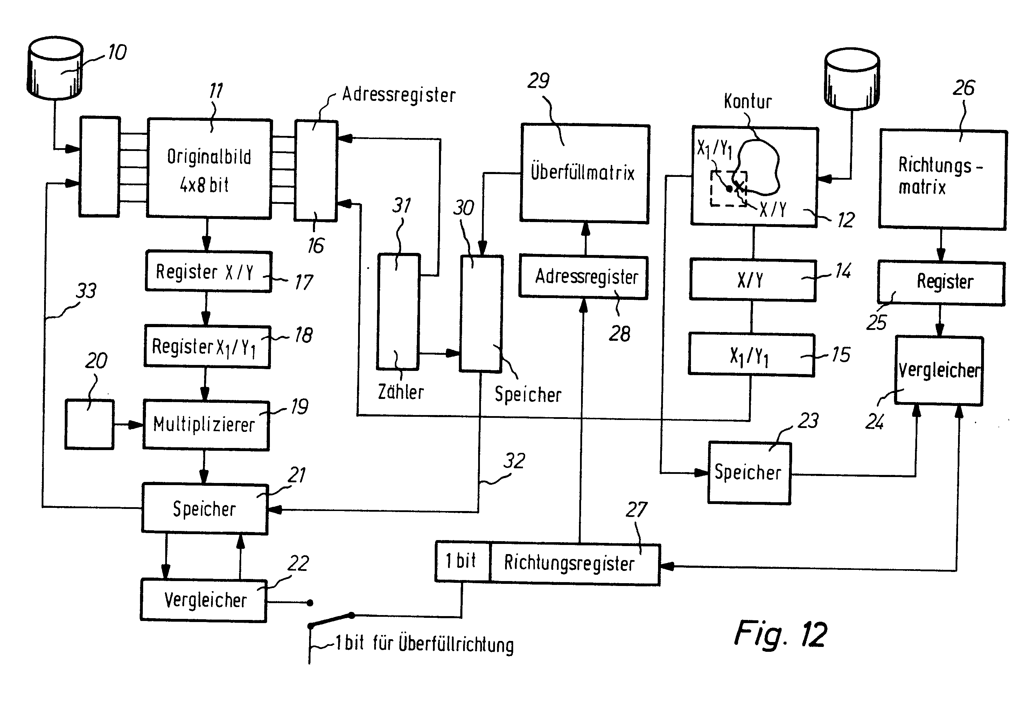

Wie die einzelnen Schritte des Überfüllungsvorgangs ablaufen, wird im folgenden anhand der Fig. 12 näher erläutert. Es wird in Fig. 12 davon ausgegangen, daß die Farbauszugssignale Y, M, C und K des Originalbildes bereits nach optoelektronischer Abtastung und Digitalisierung in gespeicherter Form vorliegen. Es kann z. B. auf ein bekanntes Bildverarbeitungssystem für die Drucktechnik, z. B. das System Chromacom der Anmelderin zurückgegriffen werden, bei dem die Bildsignale nach sämtlichen reproduktionstechnischen Korrekturen und Montagen in Form von digitalisiert gespeicherten Farbauszügen vorliegen, bevor mit diesen Daten die elektronische Herstellung der einzelnen Farbauszüge, die Ausgabe eines Proofs oder auch die Sichtbarmachung des Druckresultates auf einem Farbmonitor stattfinden. Die Farbauszüge Y, M, C und K sind bei diesem System jeweils in 8-bit-Codierung auf einem Magnetplattenspeicher abgelegt. In Fig. 12 ist ein solcher Plattenspeicher 10 dargestellt, von dem die digitalisierten Bildsignale der Farbauszüge in einem Speicher 11, der 4 × 8 bit tief ist und der einen schnellen Zugriff hat, übertragen werden.

Weiterhin wird in Fig. 12 davon ausgegangen, daß auch die Konturen, an denen der Überfüllvorgang stattfinden soll, bereits bekannt bzw. ermittelt worden und in einem Konturspeicher 12 abgelegt sind. Da die Aussage, daß eine Kontur vorliegt, wenig Information benötigt, genügt es, diesen Speicher für 1 bit Tiefe auszulegen. Die Kontur kann entweder durch optoelektrische Abtastung einer Konturmaske, durch Eingeben mittels eines Digitizers oder aber auch durch eine automatische Konturenfindung, wie sie z. B. in der PCT-Offenlegungsschrift NR. DE 80/00 069 beschrieben ist, erfolgen.

Zur Ermittlung der konturbestimmenden Farbe werden aus dem Konturspeicher 12 die Koordinaten der Konturpunkte in ein Register 14 und die Koordinaten eines Nachbarpunktes, der nicht innerhalb der Konturmaske liegt, in ein weiteres Koordinatenregister 15 gegeben. Mit den Koordinaten dieser beiden Bildpunkte wird der Speicher 11 über ein Adreßregister 16 adressiert, und die so adressierten Farbauszugssignale, die zu diesen Bildpunkten gehören, werden in entsprechende Informationsregister 17 und 18 übertragen, die an den Speicher 11 angeschlossen sind. Diese Register sind mit einem Multiplizierer 19 verbunden, der seinerseits wieder mit einem Koeffizientenspeicher 20 und einem Zwischenspeicher 21 in Verbindung steht. Im Multiplizierer 19 werden dann, wie eingangs beschrieben, die Farbauszugssignale Y, M, C und K der beiden Bildpunkte mit den Koeffizienten $a_1$, $a_2$, $a_3$ und $a_4$ multipliziert, und das Resultat wird in dem Speicher 21 abgelegt.

Mit dem Speicher 21 ist weiterhin ein Vergleicher verbunden, der die so bewerteten Signale miteinander vergleicht und das maximale Signal ermittelt. Dieses maximale Signal stellt das konturbestimmende Farbauszugssignal dar und gibt somit an, welcher der beiden Bildpunkte konturbestimmend ist, wozu ein bit gesetzt wird, um diese Entscheidung festzuhalten. Im Speicher 21 werden nach dem Vergleich die Farbauszugssignale für die beiden Bildpunkte entsprechend der vorher beschriebenen Überfüllvorschrift kombiniert und separat abgespeichert. So wird für den Konturpunkt das Farbauszugssignal der dunkleren Farbe, die das Maximum ist, sowie die 3 anderen Farbauszugssignale des Nachbarpunktes gespeichert, während für den Nachbarpunkt die Farbauszugssignale unverändert beibehalten werden.

Bei anderer Überfüllrichtung wird in dem nicht konturbestimmenden Farbauszugssignal das Farbauszugssignal, das der konturbestimmenden Farbe entspricht, von dem konturbestimmenden Bildpunkt übernommen, und die anderen Farbauszugssignale dieses Punktes werden beibehalten. Für den konturbestimmenden Punkt werden die Farbauszugssignale in diesem Fall unverändert beibehalten.

Unabhängig von dieser Maximum-Auswahl wird in einem weiteren Verfahrensschritt festgestellt, in welcher Richtung überfüllt werden soll. Hierzu werden die zu den Koordinaten der in den Registern 14 und 15 gespeicherten Bildpunkte gehörenden Informationen aus dem Speicher 12 in einen Umgebungsspeicher 23 eingelesen, der mit dem Speicher 12 sowie mit einem Vergleicher 24 verbunden ist. Der Vergleicher 24 ist über ein Register 25 mit einem Speicher 26 verbunden, in dem die in Fig. 5 bis 11 dargestellten Richtungsmatrizen abgelegt sind. Das im Umgebungsspeicher befindliche Umfeld der Konturpunkte wird mit diesen Matrizen verglichen, und es wird festgestellt, welche dieser Matrizen mit der Kontur übereinstimmt. Dann wird diese Matrize in ein Register 27 übertragen, wobei diese Matrix zahlenmäßig als Binärzahl interpretiert wird und in dem Register 27 ein bit hinzugefügt wird, das bei der Auswertung des konturbestimmenden Farbauszugs gewonnen wurde. Dieses bit kann andererseits aber auch fest vorgegeben werden, wodurch die Überfüllrichtung dann willkürlich festgelegt ist. Der Speicherinhalt des Registers 27 wird im folgenden als Richtungsoperator bezeichnet und wird als Adresse an ein Adreßregister 28 gegeben, das mit einem Speicher 29 verbunden ist, in dem die Überfüllmatrizen, wie sie in den Fig. 5 bis 11 dargestellt sind, gespeichert sind. Dieses Richtungsoperatorwort sucht dann über die Adresse aus dem Speicher 29 die entsprechende Überfüllmatrix aus, die zu diesem Konturpunkt gehört. Die Überfüllmatrizen geben, wie aus den Fig. 5—11 zu ersehen ist, an, welche Bildpunkte überfüllt bzw. nicht überfüllt werden sollen.

Je nach der vorgegebenen Überfüllbreite ist auch die Größe dieser Überfüllmatrizen vorgegeben, und es müssen vor dem Überfüllvorgang die entsprechenden Matrizen generiert und in den Speicher eingegeben werden.

Nach erfolgter Auswahl wird die entsprechende Überfüllmatrix in einen weiteren Speicher 30 gegeben, der mit einem Adreßzähler 31 verbunden ist. Dieser Adreßzähler zählt von der Adresse 0/0 ausgehend, kontinuierlich die beiden Koordinatenrichtungen in Einzelschritten ab, wobei in x- und y-Richtung die einzelnen Bildpunkte der Überfüllmatrix abgefragt werden, ob die einzelnen Bildpunkte überfüllt werden sollen oder nicht. Der Adreßzähler ist gleichzeitig mit dem Adreßzähler 16 des Speichers 11 verbunden und adressiert dort die zugehörigen Bildpunkte im Originalbild. Die bei der koordinatenmäßigen Abfrage des Speichers 30 erhaltenen Werte 0 oder 1, d. h. überfüllen oder nicht, werden über eine Leitung 32 an den Speicher 21 gegeben, und entsprechend dem dort gesetzten einen bit wird entschieden, welche der in diesem Speicher abgelegten Farbauszugssignal-Kombinationen den entsprechenden Bildpunkt im Originalbild ersetzen. Hierzu ist der Speicher 21 über eine Leitung 33 mit dem Eingang des Speichers 11 verbunden. So werden sämtliche Punkte der Überfüllmatrix über den Zähler 31 und den Adreßeingang 16 des Speichers 11 angesprochen und die entsprechenden Bildpunkt-Informationen aus dem Speicher 21 ausgelesen.

**Patentansprüche**

1. Verfahren zum Vermeiden von Bildfehlern beim Mehrfarbendruck, die durch Ungenauigkeiten beim Übereinanderdruck der einzelnen Druckfarben Magenta (M), Cyan (C), Gelb (Y) und Schwarz (K) an Konturen entstehen, wobei eine Originalbildvorlage optisch-elektrisch abgetastet wird und bei der Abtastung trichromatische, primäre Farbmeßwerte R, G, B gewonnen werden, für die die Druckfarben (M, C, Y und K) in Farbauszugssginale umgewandelt werden, welche die Herstellung der beim Druck verwendeten Farbauszüge steuern und wobei in den Farbauszügen an Konturen, d. h. an den Grenzen zwischen den Farbbereichen, jeweils die Randzone eines Farbbereichs einer Farbe unter die Randzone eines Bereichs einer anderen Farbe verschoben wird, dadurch gekennzeichnet, daß im Bereich der Kontur von den vier Farbauszugssignalen (M, C, Y und K) das Farbauszugssignal ausgesucht wird, das am meisten konturbestimmend ist, indem die einzelnen Farbauszugssignale mit einem für die jeweilige Farbauszugsfarbe charakteristischen Faktor bewertet werden und von dem so bewerteten Signal das größte als konturbestimmendes Farbauszugssignal ausgesucht wird, daß mit Hilfe des ausgesuchten Signals bestimmt wird, ob der dunklere Farbbereich innerhalb oder außerhalb der Kontur liegt, daß das konturbestimmende Farbauszugssignal beibehalten wird und daß die nicht ausgesuchten Farbauszugssignale des dunkleren Bereichs durch die entsprechenden Farbauszugssignale des helleren Bereichs in einem vorgegebenen Bereich ersetzt werden, wobei die Farbauszugssignale des helleren Bereichs, die an den dunkleren Bereich angrenzen, beibehalten werden.

2. Verfahren zum Vermeiden von Bildfehlern beim Mehrfarbendruck, die durch Ungenauigkeiten beim Übereinanderdruck der einzelnen Druckfarben Magenta (M), Cyan (C), Gelb (Y) und Schwarz (K) an Konturen entstehen, wobei eine Originalbildvorlage optisch-elektrisch abgetastet wird und bei der Abtastung trichromatische, primäre Farbmeßwerte R, G, B gewonnen werden, die für die Druckfarben (M, C, Y und K) in Farbauszugssignale umgewandelt werden, welche die Herstellung der beim Druck verwendeten Farbauszüge steuern und wobei in den Farbauszügen an Konturen, d. h. an den Grenzen zwischen den Farbbereichen jeweils die Randzone eines Bereichs einer helleren Farbe unter die Randzone eines Bereichs einer dunkleren Farbe verschoben wird, dadurch gekennzeichnet, daß im Bereich der Kontur von den vier Farbauszugssignalen (M, C, Y und K) das Farbauszugssignal ausgesucht wird, das am meisten konturbestimmend ist, indem die einzelnen Farbauszugssignale mit einem für die jeweilige Farbauszugsfarbe charakteristischen Faktor bewertet werden und von den so bewerteten Signalen das größte als konturbestimmendes Farbauszugssignal ausgewählt wird, daß in dem hellen Bereich in einem vorgegebenen Bereich das Farbauszugssignal, das der Farbe des ausgesuchten Signals entspricht, durch das ausgesuchte Farbauszugssignal ersetzt wird und daß die Farbauszugssignale des dunkleren Bereichs, die an den helleren Bereich angrenzen, unverändert beibehalten werden.

**Claims**

1. Process for preventing image defects in the case of multicolour printing which are engendered by inaccuracies during superimposition printing of the separate printing colours magenta (M), cyan (C), yellow (Y) and black (K) along contours, wherein an image original is scanned opto-electronically and trichromatic primary colour values R, G, B are obtained during the scanning operation, for which the printing colours (M, C, Y and K) are converted into colour separation signals which control the production of the colour separations utilized during printing, and wherein the marginal portion of a colour area of one colour is displaced in each case below the marginal portion of an area of another colour at contours in the colour separations, i. e. at the borders between the colour areas, characterized in that the colour separation signal which has the greatest effect in determining the contours is sought out of the four colour separation signals (M, C, Y and K) in the contour area, by tagging the separate colour separation signals with a factor characteristic of the colour separation colour in question and that the most intensive of the signals so tagged is selected as the contour, determinant colour separation signal, that it is determined by means of the signal selected wether the darker colour area lies within or without the contour, that the contour, determinant colour separation signal is retained and that the non-selected colour separation signals of the darker area are replaced in a predetermined section by the corresponding colour separation signals fo the lighter area, the colour separation signals of the lighter area contiguous to the darker area, being retained.

2. Process for preventing image defects in the case of multicolour printing which are engendered by inaccuracies during superimposition printing of the separate printing colours magenta (M), cyan (C), yellow (Y) and black (K) along outlines, wherein an image original is scanned optoelectronically and trichromatic primary colour values R, G, B are obatined during the scanning operation which for the printing colours (M, C, Y and K) are converted into colour separation signals which control the production of the colour separations utilized during printing and wherein the marginal portion of an area of a lighter colour is displaced beneath the marginal portion of an area of a darker colour in the colour separations at contours, i. e. at the boundaries between the colour areas, in each case, characterized in that the colour separation signal which has the greatest effect in determining the contours is selected from the four colour separation signals (M, C, Y and K), by tagging the separate colour separation signals with a factor characteristic of the colour separation colour in question and the most intensive of the signals so tagged is selected as the contour-determinant colour separation signal, that the colour separation signal corresponding to the colour of the signal selected is replaced by the colour separation signal selected within a predetermined section in the light area, and that the colour separation signals of the darker area contiguous to the lighter area, are retained unchanged.

## Revendications

1. Procédé pour éviter les erreurs d'image dans des impressions polychromes, erreurs résultant de l'imprécision de la superposition de l'impression des différentes couleurs d'impression Magenta (M), Cyan (C), Jaune (Y) et Noir (K) au niveau des contours, en détectant de façon opto-électrique un modèle de l'image originale et en obtenant par détection trichrome les grandeurs de mesure des couleurs primaires (R, G, B) que l'on convertit en signaux d'extrait de couleur pour les couleurs d'impression M, C, Y et K), qui commandent la réalisation des extraits de couleur utilisés pour l'impression, et dans les extraits de couleur, au niveau des contours c'est-à-dire à la frontière entre les plages de couleurs, chaque fois la zone de bord d'une plage de couleur correspondant à une couleur est décalée sous la zone de bord d'une plage d'une autre couleur, caractérisé en ce qu'au niveau du contour, on recherche le signal d'extrait de couleur à partier des quatre signaux d'extrait de couleur (M, C, Y et K), signal qui est le plus déterminant pour le contour, en traitant les différents signaux d'extrait de couleur avec un coefficient caractéristique pour l'extrait de couleur correspondant, et à partir du signal ainsi traité, on recherche le plus grand signal de couleur comme déterminant le contour, en ce qu'à l'aide du signal ainsi recherché, on détermine si la plage de couleur la plus foncée se trouve à l'intérieur ou à l'extérieur du contour, en ce qu'on conserve le signal d'extrait de couleur déterminant le contour et en ce que l'on remplace les signaux d'extrait de couleur non retenus de la plage plus sombre par les signaux d'extrait de couleur correspondants de la plage plus claire dans la plage prédéterminée, les signaux d'extrait de couleur de la plage la plus claire adjacente à la plage la plus sombre étant conservés.

2. Procédé pour éviter les erreurs d'image en impression polychrome, erreurs résultant des imprécisions de la superposition de l'impression des différentes couleurs d'impression Magenta (M), Cyan (C), Jaune (Y) et Noir (K) au niveau des contours, en détectant de façon opto-électrique un modèle d'image originale et en ce qu'on forme par détection trichrome les grandeurs de mesure des couleurs primaires (R, G, B) qui sont transformées en des signaux d' extrait de couleur pour les couleurs d'impression (M, C, Y et K), qui commandent la réalisation des extraits de couleur utilisés à l'impression, et en ce que dans les extraits de couleur au niveau des contours c'est-à-dire à la frontière entre les plages de couleurs, on déplace la zone de bord d'une plage d'une couleur plus claire sous la zone de bord d'une plage d'une couleur plus sombre, caractérisé en ce qu'au niveau du contour, on recherche parmi les quatre signaux d'extrait de couleur (M, C, Y, etk), le Signal d'extrait de couleur qui détermine le plus le contour, en ce qu'on tratie les différents signaux d'extrait de couleur avec un coefficient caractéristique de la couleur de l'extrait de couleur correspondant et à partir des signaux ainsi traités, on choisit le plus grand signal d'extrait de couleur déterminant le contour, en ce que dans la plage claire dans une plage prédéterminée, on remplace le signal d'extrait de couleur qui correspond à la couleur du signal choisi par le signal d'extrait de couleur choisi et en ce que l'on conserve sans les changer les signaux d'extrait de couleur de la plage plus sombre adjacente à la plate plus claire.

Fig. 1

Fig. 2b

Fig. 2a

Fig. 3a

Fig. 3b

Fig. 4a

Fig. 4b

9

Fig. 5a

Fig. 5b

Fig. 6a

Fig. 6b

Fig. 7a

Fig. 7b

Fig. 8a

Fig. 8b

Fig. 9a

Fig. 9b

Fig. 10a

Fig. 10b

Fig. 11a

Fig. 11b

Fig. 12